# EUROPÄISCHE PATENTSCHRIFT

(11) **EP 1 259 783 B1**
(45) Veröffentlichungstag und Bekanntmachung des Hinweises auf die Patenterteilung: **08.02.2006**
(21) Anmeldenummer: 01911689.6
(22) Anmeldetag: 23.02.2001
(51) Int. Cl.: G01G 21/28

(54) **ANALYSENWAAGE MIT ANGEBAUTER ANZEIGE- UND BEDIENEINHEIT**
ANALYTICAL BALANCE COMPRISING A DISPLAY AND OPERATING UNIT
BALANCE D'ANALYSE DOTEE D'UNE UNITE D'AFFICHAGE ET DE COMMANDE INTEGREE

(30) Priorität: 02.03.2000 DE 20004005 U
(43) Veröffentlichungstag der Anmeldung: 27.11.2002
(73) Patentinhaber: SARTORIUS AG, 37075 Göttingen (DE)
(72) Erfinder: BIERICH, Eduard, 34346 Hann-Münden (DE); BÖTCHER, Günter, 37120 Bovenden (DE); LAUBSTEIN, Michael, 37077 Göttingen (DE); MARTENS, Jörg, Peter, 37120 Bovenden (DE); WINKELBACH, Jürgen, 37133 Friedland (DE)
(86) Internationale Anmeldenummer: PCT/EP2001/002041
(87) Internationale Veröffentlichungsnummer: WO 2001/065216

(56) Entgegenhaltungen:
- DE-A- 3 939 959
- DE-C- 3 508 873
- GB-A- 2 246 446
- US-A- 4 858 711

## Beschreibung

Die Erfindung bezieht sich auf eine elektronische Waage mit einem Gehäuse, mit einer Waagschale, mit einem Windschutz, der die Waagschale wenigstens teilweise umgibt, und mit einer Anzeige- und Bedieneinheit, die mit dem Gehäuse der Waage verbunden ist.

Waagen dieser Art sind allgemein bekannt und beispielsweise in der DE 35 08 873 beschrieben.

Nachteilig an dieser bekannten Ausführungsform ist, dass die Wärme, die in der Anzeige- und Bedieneinheit erzeugt wird, ungehindert in das Gehäuse der Waage eindringen kann. Dasselbe gilt auch für die schwenkbare Anzeige- und Bedieneinheit, wie sie aus der DE 39 39 959 bekannt ist. Auch dort kann die Wärme über den Schwenkarm, der aus Stabilitätsgründen im allgemeinen aus Metall hergestellt ist, direkt in das Waagengehäuse und den vom Windschutz umgebenen Wägeraum fließen.

Zur Umgebung dieser Wärmeproblematik ist es weiterhin allgemein bekannt, die Anzeige- und Bedieneinheit gehäusemäßig von der restlichen Waage zu trennen und nur durch ein Datenkabel miteinander zu verbinden. Diese Lösung ist zwar bezüglich der Wärmeübertragung ideal, falls der Bediener der Waage einen genügend großen Abstand zwischen der Anzeige- und Bedieneinheit und der restlichen Waage einhält, bringt aber den Nachteil zusätzlicher Stecker und Kabelverbindungen und einer erschwerten Handhabung bei einem Ortswechsel der Waage.

Aufgabe der Erfindung ist es daher, eine Waage der eingangs genannten Art anzugeben, bei der die Anzeige- und Bedieneinheit direkt mit der Waage verbunden ist und die trotzdem eine Wärmeübertragung von der Anzeige- und Bedieneinheit zur restlichen Waage möglichst stark unterdrückt.

Erfindungsgemäß wird dies dadurch erreicht, dass das Verbindungsteil zwischen der Anzeige- und Bedieneinheit und dem Gehäuse aus einem Material mit schlechter Wärmeleitung besteht, dass mindestens eine vertikale Strahlungsschutzplatte zwischen der Anzeige- und Bedieneinheit und dem Gehäuse vorhanden ist und dass das Verbindungsteil zwischen der Anzeige- und Bedieneinheit und dem Gehäuse so gestaltet ist, dass es die Luftkonvektion auf beiden Seiten der Strahlungsschutzplatte(n) möglichst wenig beeinträchtigt.

Es wird also nicht nur die Wärmeleitung zwischen Anzeige- und Bedieneinheit und Gehäuse reduziert, sondern auch die Wärmestrahlung abgeschirmt und durch die Ermöglichung der Luftkonvektion eine Kühlung der Strahlungsschutzplatte(n) erreicht.

Vorteilhafte Ausgestaltungen ergeben sich aus den Unteransprüchen.

Die Erfindung wird im folgenden anhand der schematischen Figuren beschrieben.
Dabei zeigt:
Figur 1 eine erste Ausgestaltung der Waage in Seitenansicht,
Figur 2 eine Aufsicht von oben auf das Verbindungsteil zwischen der Anzeige- und Bedieneinheit und der restlichen Waage,
Figur 3 einen Schnitt durch das Verbindungsteil längs der strichpunktierten Linie III-III in Figur 2,
Figur 4 die Strahlungsschutzplatte allein und
Figur 5 einen Teil einer zweiten Ausgestaltung der Waage in Seitenansicht.

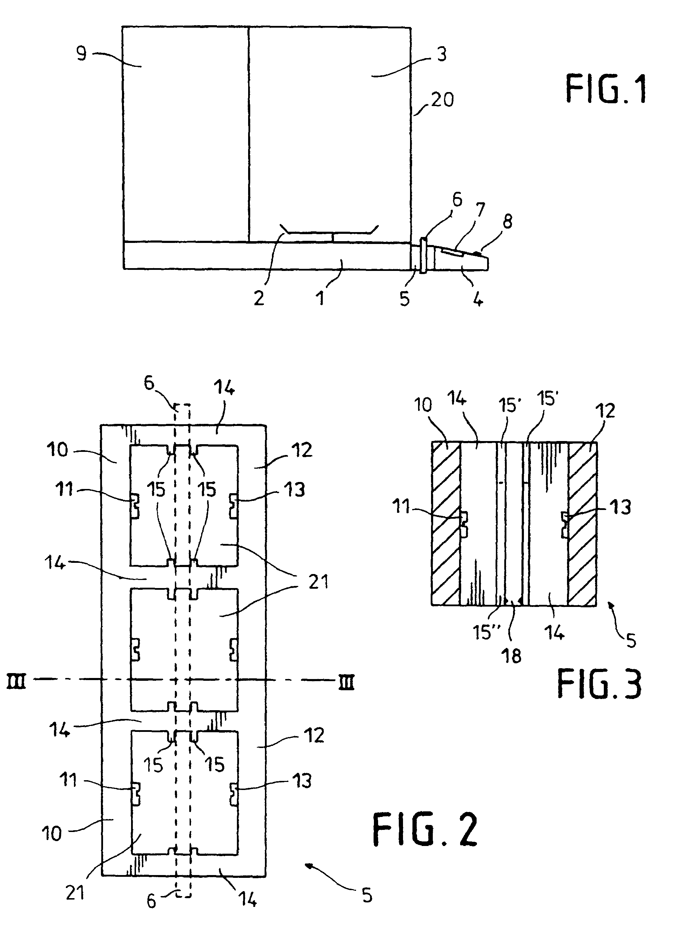

In der Übersichtszeichnung der Figur 1 erkennt man die Grundplatte 1 des Gehäuses der Waage, die Waagschale 2, den die Waagschale umgebenden Windschutz 3 und die Anzeige- und Bedieneinheit 4. Auf der Anzeige- und Bedieneinheit 4 sind die Anzeige 7 und eine Bedienungstaste 8 angedeutet. Hinter dem Windschutz 3 ist weiterhin ein Gehäusebereich 9 eingezeichnet, der beispielsweise die Waagenelektronik aufnimmt.

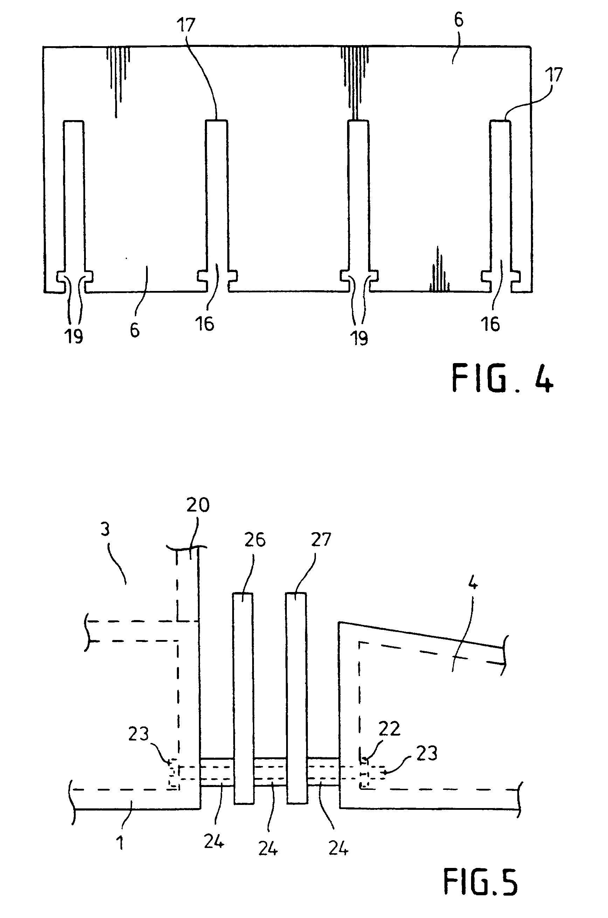

Die Verbindung zwischen der Anzeige- und Bedieneinheit 4 und der Gehäusegrundplatte 1 erfolgt nun durch ein Verbindungsteil 5, das in Figur 2 vergrößert in Aufsicht und in Figur 3 ebenfalls vergrößert in einem Schnitt längs der strichpunktierten Linie III-III in Figur 2 gezeichnet ist. Weiterhin ist in Figur 1 eine Strahlungsschutzplatte 6 erkennbar, die auch in Figur 2 gestrichelt eingezeichnet ist und die in Figur 4 nochmal allein und vergrößert dargestellt ist.

Das Verbindungsteil 5 besteht aus einem schlecht wärmeleitenden Material wie z. B. Kunststoff. Es weist auf seiner (in den Figuren 1-3) linken Seite eine durchgehende Platte 10 auf, die mittels Schrauben 11 an der Grundplatte des Gehäuses festgeschraubt ist. Auf seiner (in den Figuren 1-3) rechten Seite weist das Verbindungsteil 5 ebenfalls eine durchgehende Platte 12 auf, die mittels Schrauben 13 an der Anzeige- und Bedieneinheit 4 festgeschraubt ist. Die beiden Platten 10 und 12 sind durch vertikale Verbindungsstege 14 miteinander verbunden. Die Anzahl und Dicke der Verbindungsstege 14 ist dabei nur so groß, dass die konstruktiv erforderlichen Festigkeitswerte der Verbindung zwischen der Anzeige- und Bedieneinheit 4 und der Grundplatte 1 des Gehäuses erreicht werden. Dadurch wird die Wärmeleitung zwischen der Anzeige- und Bedieneinheit und der Grundplatte des Gehäuses möglichst gering gehalten.

Die Verbindungsstege 14 weisen etwa in der Mitte zwischen den Platten 10 und 12 je zwei kleine vertikale Rippen 15 auf. Zwischen diese Rippen kann eine Strahlungsschutzplatte 6 von oben her eingeschoben werden, die in Figur 2 gestrichelt eingezeichnet ist und die in Figur 4 noch mal allein dargestellt ist. In Figur 3 ist die Strahlungsschutzplatte der Übersichtlichkeit halber nicht eingezeichnet. Die Rippen 15 führen und halten die Strahlungsschutzplatte seitlich. Die Strahlungsschutzplatte 6 weist weiter Schlitze 16 auf, die so dimensioniert sind, dass sie die Verbindungsstege 14 mit nur wenig Spiel seitlich umfassen. Das jeweilige obere Ende 17 der Schlitze wirkt beim Einführen der Strahlungsschutzplatte von oben her als Anschlag und liegt auf der Oberseite der Verbindungsstege 14 auf. Die Rippen 15 sind in ihrem unteren Bereich 15" federnd, wie es in Figur 3 angedeutet ist: Nur der obere Bereich 15' der Rippen ist fest mit dem jeweiligen Verbindungssteg 14 verbunden, der untere Bereich 15" kann federnd nachgeben. Eine kleine Nase 18 im unteren Bereich 15" sorgt im Zusammenwirken mit jeweils einer Ausnehmung 19 an den Schlitzen 16 für ein Einrasten der Strahlungsschutzplatte 6, sodass sie nur nach Überwindung des Rastwiderstandes nach oben aus dem Verbindungsteil 5 herausgezogen werden kann.

Die Strahlungsschutzplatte 6 dient dazu, die Wärmestrahlung, die von der Anzeige- und Bedieneinheit 4 ausgeht, vom unteren Teil des Wägeraumes 3 und der Waagschale 2 fernzuhalten. Die Strahlungsschutzplatte reflektiert einen Teil der Wärmestrahlung und absorbiert den restlichen Teil. Um die Absorption und damit die Erwärmung der Strahlungsschutzplatte 6 möglichst gering zu halten, weist sie vorteilhafterweise ein großes Reflektionsvermögen für Wärmestrahlung auf. Beispielsweise wird dies dadurch erreicht, dass die Strahlungsschutzplatte aus Metall besteht und eine blanke Oberfläche aufweist. Beispielsweise ist eine Aluminiumplatte gut als Strahlungsschutzplatte geeignet. Es ist jedoch auch möglich, die Strahlungsschutzplatte aus Kunststoff herzustellen, dessen Oberfläche metallisiert wird.

Unterstützt wird die Wirkung der Strahlungsschutzplatte 6 durch eine wärmestrahlungsreflektierende Beschichtung der Frontscheibe 20 des Windschutzes. Vorteilhafterweise kommt hierfür eine im sichtbaren Strahlungsbereich durchsichtige Beschichtung aus Indium und Zinnoxid in Frage. Durch diese Beschichtung wird einmal die Wärmestrahlung, die oberhalb der oberen Kante der Strahlungsschutzplatte 6 von der Anzeige- und Bedieneinheit 4 zur Frontscheibe 20 gelangt, wenigstens teilweise reflektiert und heizt dadurch den Wägeraum 3 nicht auf. Aber auch die Wärmestrahlung, die an der Rückseite der Strahlungsschutzplatte 6 entsteht, wird durch die reflektierende Beschichtung teilweise reflektiert und trägt dadurch nicht zum Aufheizen des Wägeraumes 3 bei.

Die Höhe der Strahlungsschutzplatte 6 braucht nicht unbedingt so groß gemacht zu werden, dass keine direkte Wärmestrahlung von der Anzeige- und Bedieneinheit 4 die Frontscheibe 20 des Windschutzes 3 trifft. Es reicht vielmehr, wenn der untere Bereich der Frontscheibe 20 und damit des Wägeraumes 3 geschützt wird. Denn gerade eine Übertemperatur der Luft im unteren Bereich des Wägeraumes stört wägetechnisch, da sich dadurch eine instabile Luftschichtung ergibt. Eine leichte Übertemperatur im oberen Bereich des Wägeraumes führt demgegenüber zu einer thermisch stabilen Luftschichtung und ist daher für Wägungen eher günstig als eine konstante Temperaturverteilung.

Die Übertemperatur der Strahlungsschutzplatte 6, die durch die teilweise Absorption der auftreffenden Wärmestrahlung entsteht, wird dadurch gering gehalten, dass die Strahlungsschutzplatte als Kühlblech wirkt. Um die freie Konvektion der Luft möglichst wenig zu stören, weist das Verbindungsteil 5 zwischen den Verbindungsstegen 14 große Öffnungen 21 auf, sodass die Luft fast ungestört auf beiden Seiten der Strahlungsschutzplatte 6 aufsteigen kann und dadurch die Strahlungsschutzplatte kühlen kann.

Eine zweite Ausgestaltung der Waage ist in Figur 5 gezeigt, wobei nur die für die Erfindung wesentliche Verbindung zwischen der Anzeige- und Bedieneinheit und der restlichen Waage gezeichnet ist. Die Anzeige- und Bedieneinheit 4 ist mit der Grundplatte 1 der Waage durch mindestens zwei Schrauben 23 mit aufgesteckten Abstandshülsen 24 verbunden. Zwischen den Abstandshülsen 24 sind zwei vertikale Strahlungsschutzplatten 26 und 27 gehalten. Konstruktive Ausgestaltungen sind in vielfältigen Varianten möglich: Statt der Schraube 23 mit der Mutter 22 (wie in Figur 5 gezeichnet) ist auch die Benutzung eines Gewindestabes mit je einer Mutter auf beiden Seiten möglich oder eines Stabes, der nur an beiden Enden Gewinde trägt. Die Abstandshülsen 24 können als getrennte Hülsen auf die Schrauben bzw. Stäbe aufgesteckt sein, können aber auch integraler Bestandteil der Stäbe sein. Genauso können die Strahlungsschutzplatten 26 und 27 nur je ein Loch für jede durchgehende Schraube 23 bzw. für jeden durchgehenden Stab aufweisen, sodass die Strahlungssehutzplatten nach der Montage fest mit der Waage verbunden sind; sie können statt dessen aber auch vertikale Schlitze aufweisen, sodass sie nach oben herausgenommen werden können, wie es schon in der ersten Ausgestaltung gemäß den Figuren 1 bis 4 vorgesehen war. Die Benutzung von zwei Strahlungsschutzplatten 26 und 27 hat den Vorteil, dass die Wärmestrahlung, die aufgrund der Übertemperatur der Strahlungsschutzplatte 27 auch auf deren Rückseite entstehen, nicht direkt die Frontscheibe 20 des Windschutzes und die Grundplatte 1 des Gehäuses der Waage trifft, sondern erst mal die Strahlungsschutzplatte 26. Erst die Wärmestrahlung, die auf der Rückseite der Strahlungssehutzplatte 26 entsteht, trifft die Frontscheibe 20 und die Grundplatte 1 des Gehäuses der Waage. Die Übertemperatur der Strahlungsschutzplatte 26 ist jedoch deutlich geringer als die Übertemperatur der Strahlungsschutzplatte 27, sodass die Wärmestrahlungsmenge, die die Frontscheibe 20 trifft, entsprechend geringer ist.

Diese Ausführung mit zwei Strahlungsschutzplatten ist selbstverständlich auch für die erste Ausgestaltung gemäß den Figuren 1 bis 4 möglich. Dazu müssen nur die Verbindungsstege 14 etwas länger ausgebildet sein und Rippen 15 für zwei Strahlungsschutzplatten aufweisen.

Wenn im Vorstehenden von Übertemperaturen die Rede war, so sind dies Übertemperaturen von maximal wenigen K. Aufgrund der hohen Empfindlichkeit von Analysenwaagen wirken sich diese geringen Temperaturunterschiede jedoch schon merklich auf das Wägeergebnis aus, sodass die beschriebenen Wärmeschutzmaßnahmen sinnvoll und wichtig sind.

## Patentansprüche

1. Elektronische Waage mit einem Gehäuse, mit einer Waagschale, mit einem Windschutz, der die Waagschale wenigstens teilweise umgibt, und mit einer Anzeige- und Bedieneinheit, die mit dem Gehäuse der Waage verbunden ist, **dadurch gekennzeichnet, dass** das Verbindungsteil (5, 23/24) zwischen der Anzeige- und Bedieneinheit (4) und dem Gehäuse (1) aus einem Material mit schlechter Wärmeleitung besteht, dass mindestens eine vertikale Strahlungsschutzplatte (6, 26, 27) zwischen der Anzeige- und Bedieneinheit (4) und dem Gehäuse (1) vorhanden ist und dass das Verbindungsteil (5,23/24) zwischen der Anzeige- und Bedieneinheit (4) und dem Gehäuse (1) so gestaltet ist, dass es die Luftkonvektion auf beiden Seiten der Strahlungsschutzplatte(n) (6,26,27) möglichst wenig beeinträchtigt.

2. Elektronische Waage nach Anspruch 1, **dadurch gekennzeichnet, dass** die Strahlungsschutzplatte(n) (6) an dem Verbindungsteil (5) zwischen der Anzeige- und Bedieneinheit (4) und dem Gehäuse (1) befestigt ist und aus diesem nach oben herausnehmbar ist/sind.

3. Elektronische Waage nach einem der Ansprüche 1 oder 2, **dadurch gekennzeichnet, dass** die Strahlungsschutzplatte(n) (6,26,27) aus Metall besteht/bestehen.

4. Elektronische Waage nach einem der Ansprüche 1 oder 2, **dadurch gekennzeichnet, dass** die Strahlungsschutzplatte(n) (6,26,27) zwischen der Anzeige- und Bedieneinheit (4) und dem Gehäuse (1) aus metallisiertem Kunststoff besteht/bestehen.

5. Elektronische Waage nach einem der Ansprüche 1 bis 4, **dadurch gekennzeichnet, dass** das Verbindungsteil (5) zwischen der Anzeige- und Bedieneinheit (4) und dem Gehäuse (1) ein Kunststoff-Formteil ist, das Öffnungen (21) zum Durchtritt der Luft aufweist.

6. Elektronische Waage nach einem der Ansprüche 1 bis 5, **dadurch gekennzeichnet, dass** die Strahlungsschutzplatte(n) (6) durch federnde Rippen (15, 15'/15") im Verbindungsteil (5) gehalten wird/werden.

7. Elektronische Waage nach einem der Ansprüche 1 bis 4, **dadurch gekennzeichnet, dass** das Verbindungsteil zwischen der Anzeige- und Bedieneinheit (4) und dem Gehäuse (1) aus mindestens zwei Stäben bzw. Schrauben (23) besteht und dass die Strahlungsschutzplatte(n) (26,27) durch Abstandsstücke (24) auf den Stäben bzw. Schrauben (23) gehalten wird/werden.

8. Elektronische Waage nach einem der Ansprüche 1 bis 7, **dadurch gekennzeichnet, dass** die Frontscheibe (20) des Windschutzes (3) der Waage eine wärmestrahlungsreflektierende Oberflächenbeschichtung aufweist.

## Claims

1. Electronic weighing machine comprising a housing, a weighing pan, wind protection means at least partly surrounding the weighing pan, and a display and control unit connected with the housing of the weighing machine, **characterised in that** the connecting part (5, 23/24) between the display and control unit (4) and the housing (1) consists of a material with poor thermal conductivity, that at least one vertical radiation protection plate (6, 26, 27) is present between the display and control unit (4) and the housing (1) and that the connecting part (5, 23/24) between the display and control unit (4) and the housing (1) is so formed that it impairs the air convection on both sides of the radiation protection plate or plates (6, 26, 27) as little as possible.

2. Electronic weighing machine according to claim 1, **characterised in that** the radiation protection plate or plates (6) is or are fastened to the connecting part (5) between the display and control unit (4) and the housing (1) and is or are withdrawable therefrom in upward direction.

3. Electronic weighing machine according to one of claims 1 and 2, **characterised in that** the radiation protection plate or plates (6, 26, 27) consists or consist of metal.

4. Electronic weighing machine according to one of claims 1 or 2, **characterised in that** the radiation protection plate or plates (6, 26, 27) between the display and control unit (4) and the housing (1) consists or consist of metallised plastics material.

5. Electronic weighing machine according to one of claims 1 to 4, **characterised in that** the connecting part (5) between the display and control unit (4) and the housing (1) is a plastics material moulded part having openings (21) for the passage of air.

6. Electronic weighing machine according to one of claims 1 to 5, **characterised in that** the radiation protection plate or plates (6) is or are held by resilient ribs (15, 15'/15") in the connecting part (5).

7. Electronic weighing machine according to one of claims 1 to 4, **characterised in that** the connecting part between the display and control unit (4) and the housing (1) consists of at least two rods or screws (23) and that the radiation protection plate or plates (26, 27) is or are held by spacers (24) on the rods or screws (23).

8. Electronic weighing machine according to one of claims 1 to 7, **characterised in that** the front pane (20) of the wind protection means (3) of the weighing machine has a surface coating reflecting thermal radiation.

## Revendications

1. Balance électronique avec un boîtier, avec un plateau, avec un paravent, qui entoure au moins en partie le plateau, et avec une unité d'affichage et de réglage reliée au logement de la balance, **caractérisée en ce que** la partie de raccordement (5, 23/24) entre l'unité d'affichage et de réglage (4) et le logement (1) se compose d'un matériau avec une mauvaise puissance calorifique, **en ce qu'**au moins une plaque de protection verticale contre les rayonnements (6, 26, 27) est prévue entre l'unité d'affichage et de réglage (4) et le boîtier (1) et **en ce que** la partie de raccordement (5, 23/24) entre l'unité d'affichage et de réglage (4) et le boîtier (1) est façonnée de telle sorte qu'elle entrave le moins possible la convection d'air sur les deux parties de la/des plaque(s) de protection contre les rayonnements (6, 26, 27).

2. Balance électronique selon la revendication 1, **caractérisée en ce que** la/les plaque(s) de protection contre les rayonnements (6) est/sont fixée(s) à la partie de raccordement (5) entre l'unité d'affichage et de réglage (4) et le boîtier (1) et peut/peuvent être retirées de celui-ci vers le haut.

3. Balance électronique selon la revendication 1 ou 2, **caractérisée en ce que** la/les plaque(s) de protection contre les rayonnements (6, 26, 27) se compose(nt) de métal.

4. Balance électronique selon la revendication 1 ou 2, **caractérisée en ce que** la/les plaque(s) de protection contre les rayonnements (6, 26, 27) entre l'unité d'affichage et de réglage (4) et le boîtier (1) se compose(nt) de matière plastique métallisée.

5. Balance électronique selon l'une quelconque des revendications 1 à 4, **caractérisée en ce que** la partie de raccordement (5) entre l'unité d'affichage et de réglage (4) et le boîtier (1) est une pièce moulée en plastique qui comporte des ouvertures (21) pour le passage de l'air.

6. Balance électronique selon l'une quelconque des revendications 1 à 5, **caractérisée en ce que** la/les plaque(s) de protection contre les rayonnements (6) est/sont maintenue(s) par des nervures élastiques (15, 15'/15") dans la partie de raccordement (5).

7. Balance électronique selon l'une quelconque des revendications 1 à 4, **caractérisée en ce que** la partie de raccordement entre l'unité d'affichage et de réglage (4) et le boîtier (1) se compose au moins de deux tiges ou vis (23) et **en ce que** la/les plaque(s) de protection contre les rayonnements (26, 27) est/sont maintenues par des entretoises (24) sur les tiges ou vis (23).

8. Balance électronique selon l'une quelconque des revendications 1 à 7, **caractérisée en ce que** le disque avant (20) du paravent (3) de la balance comporte un revêtement de surface réfléchissant le rayonnement thermique.
